Europäisches Patentamt

**European Patent Office**

Office européen des brevets

(11) Veröffentlichungsnummer: **0 218 151**
**B1**

(12) EUROPÄISCHE PATENTSCHRIFT

(45) Veröffentlichungstag der Patentschrift:
24.01.90

(51) Int. Cl.⁴: **G01B 11/08**

(21) Anmeldenummer: 86113226.4

(22) Anmeldetag: 25.09.86

(54) Messverfahren und Vorrichtung zur berührungslosen Durchmesserbestimmung dünner Drähte.

(30) Priorität: 09.10.85 DD 281573

(43) Veröffentlichungstag der Anmeldung:
15.04.87 Patentblatt 87/16

(45) Bekanntmachung des Hinweises auf die Patenterteilung:
24.01.90 Patentblatt 90/4

(84) Benannte Vertragsstaaten:
AT CH DE GB LI NL

(56) Entgegenhaltungen:
DD-A- 222 109
DE-B- 1 229 739
FR-A- 2 549 952
US-A- 3 709 610
US-A- 3 937 580

(73) Patentinhaber: Kombinat VEB NARVA,
Ehrenbergstrasse 11-14, DDR-1017 Berlin(DD)

(72) Erfinder: Günther, Klaus, Prof. Dr. sc. Dipl.-Phys.,
Amalienpark 3, DDR-1100 Berlin(DD)
Erfinder: Kloss, Hans-Georg, Dr. Dipl.-Phys.,
Eichenallee 24, DDR-1406 Hohen-Neuendorf(DD)
Erfinder: Lüdge, Wolfgang, Dr. Ing. Dipl.-Ing.,
Max-John-Strasse 7, DDR-1603 Schulzendorf(DD)

(74) Vertreter: Hoffmann, Klaus, Dr. rer. nat. et al, Hoffmann.
Eitle & Partner Patentanwälte
Postfach 81 04 20 Arabellastrasse 4,
D-8000 München 81(DE)

## Beschreibung

Die Erfindung betrifft ein Meßverfahren und eine Vorrichtung zur berührungslosen und zerstörungsfreien Bestimmung des Durchmessers an ruhenden oder laufenden dünnen Drähten, Fasern, Flüssigkeitsstrahlen u. dgl. sowie zur berührungslosen Spaltbreitenbestimmung und zur berührungslosen Durchmesserbestimmung feiner Bohrungen. Mit dem Verfahren lassen sich hohe Meßgenauigkeiten erreichen, und es kann sowohl für statische Einzelmessungen als auch besonders vorteilhaft zur kontinuierlichen Kontrolle und Steuerung den Durchmesser oder die Spaltbreite verändernder technologischer Prozesse (z. B. Ziehen, Abtragen, Aufdampfen) eingesetzt werden.

Zur berührungslosen Durchmesserbestimmung sind eine Vielzahl technischer Lösungen bekannt, die elektrische oder pneumatische Meßmittel einsetzen oder optische Verfahren anwenden, bei denen der Schattenwurf des Drahtes (DD - 106 469), seine optische Abbildung mittels Kugel- oder Zylinderlinsen (DE - 1 548 209, DE - 2 448 611) oder seine Abtastung durch einen Sehstrahl (DE - 2 105 185) ausgenutzt werden. Allen diesen Verfahren ist der Nachteil gemeinsam, daß mit kleiner werdendem Durchmesser der Meßaufwand steigt, die Meßgenauigkeit aber geringer wird.

Für sehr kleine Durchmesser, z. B. unterhalb von 220 µm, kommen deshalb Verfahren zur Anwendung, welche die Fraunhofersche Beugung ausnutzen. Es ist bekannt (z. B. E. Grimsehl, Lehrbuch der Physik, Bd. III - Optik; Brockhaus abc Physik), daß bei Beleuchtung eines Spaltes der Breite b oder eines Drahtes vom Durchmesser b mit parallelem, monochromatischem und kohärentem Licht der Wellenlänge λ ein Beugungsmuster entsteht, dessen relative Intensitätsverteilung I (β) als Funktion des Ablenkungswinkels des gebeugten Lichtes β dem Zusammenhang

$$I\ (\beta) \backsim (\sin z\,/\,z)^2$$

folgt, wobei die Größe z als Abkürzung für

$$z = \pi \cdot b \cdot \sin \beta / \lambda$$

steht. Diese Intensitätsverteilung ist symmetrisch bezüglich der Richtung des beleuchtenden Lichtes und weist abwechselnd Minima und Maxima auf, deren Lage bei bekannter Wellenlänge als Maß für den Drahtdurchmesser dienen kann (Z. angew. Physik, H. 7 (1951), S. 242).

Zur Auswertung dieses Beugungsmusters sind technische Lösungen bekannt, bei denen die Lagen der Intensitätsmaxima bzw. -minima direkt ausgemessen werden. Das kann auf fotografischem Wege geschehen (DE - 2 319 410), oder das Beugungsmuster wird mit Hilfe einer oder zweier beweglicher Fotozellen nacheinander abgetastet (DE - 1 900 924, DE 2 141 824). Derartige Verfahren sind jedoch für eine kontinuiuerliche Messung nicht geeignet. Bei einer anderen bekannten Lösung (DE - 1 623 230, DE - 1 908 275) wird durch eine rotierende oder schwingende Abtastvorrichtung das Beugungsmuster über einen ortsfesten Detektor geführt und aus dem zeitlichen Verlauf des Detektorsignals auf den räumlichen Abstand der Intensitätsmaxima bzw. -minima geschlossen. Ein ähnliches Verfahren (DE - 2 331 575) tastet das Beugungsmuster durch eine Drehscheibenmaske ab und ermittelt aus der Zeitdifferenz zwischen der Erfassung der Mitte des Musters und einem Maximum deren räumlichen Abstand. Die drei zuletzt genannten Verfahren verwenden störanfällige mechanisch bewegte Bauteile. Dazu kommt bei den beiden letzteren noch die Notwendigkeit, auch die Abtastgeschwindigkeit mit der vom Meßverfahren geforderten Genauigkeit bestimmen zu müssen. Eine besondere Schwierigkeit besteht bei diesen Methoden darin, die Lage der sehr flach verlaufenden Extrema der Intensitätsverteilung überhaupt mit hinreichender Genauigkeit festzustellen. Zu deren Überwindung sind Verfahren vorgeschlagen worden, welche durch Umwandlung des Signals in Rechteckimpulse nach seiner Diskriminierung an einer geeignet gewählten Schwelle (DE - 2 331 575) oder durch dessen Differenzierung und anschließende Nullstellenbestimmung (DE - 2 026 803) Verbesserungen der Genauigkeit erbringen sollen. Allen diesen Lösungen haftet jedoch der große Nachteil an, aus dem gesamten Beugungsmuster nur die Information weniger Bildelemente bzw. weniger Intensitätsdifferenzen benachbarter Bildelemente zu verwerten und damit besonders störanfällig gegen die unter realen Meßbedingungen auftretenden zufälligen Fehler einzelner Meßpunkte zu sein.

Den gleichen Mangel besitzt ein anderes bekanntes Verfahren (DE - 1 299 739, DE - 1 929 505, DE - 2 123 461, DE - 2 319 410), bei dem eine oder mehrere Fotozellen in festem Abstand von der Mitte des Beugungsmusters auf den Flanken zwischen einem Intensitätsmaximum und einem benachbarten Intensitätsminimum angeordnet sind und deren Intensitäts-Meßwerte als Maß für die Abweichung des Drahtdurchmessers von einem vorgegebenen Sollwert genutzt werden. Dieses Verfahren hat darüber hinaus den Nachteil, wegen der dichten Aufeinanderfolge der einzelnen Minima und Maxima nur einen sehr beschränkten Meßbereich zu überdecken.

Generell bekannt sind auch technische Lösungen zur allgemeinen Erfassung räumlicher Strukturen eines Lichtbildes und der in ihm enthaltenen räumlichen Frequenzkomponenten mit Hilfe spezieller optoelektronischer Bauelemente, die aus einer Anzahl von Fotoempfängern, z.B. in Form von Sensor-Zeilen und -Matrizen, zusammengesetzt sind (DD-PS 222 109, DE-PS 2 140 939, DE-PS 2 448 571, DE-PS 2 947 722, EP-PS 0 100 412), doch wurden diese Verfahren bisher nicht zur Erfassung und Auswertung von Beugungsmustern herangezogen.

Eine andere Gruppe bekannter technischer Lösungen wertet das Beugungsmuster durch Vergleich mit einem Bezugsbild aus. So läßt sich als Bezugsbild ebenfalls ein Beugungsmuster verwenden, welches von einem mit Licht gleicher Wellenlänge beleuchteten Hilfsspalt bekannter Breite erzeugt wird (DE-PS 827 123, DE-PS 2 138 999). Wenn die Breite dieses Spaltes und die der beugenden Struktur übereinstimmen, werden beide Beugungsmuster außerhalb des Zentralbildes identisch, und das Signal eines differentiellen Auswerteverfahrens wird zu einem Minimum. Bei anderen bekannten Verfahren kommen als Bezugsbild optische Filter zur Anwendung. In einer derartigen Lösung (DE-PS 2 165 693) besteht das optische Filter aus abwechselnd durchlässigen oder undurchlässigen Streifen und läßt bei Übereinstimmung mit dem Beugungsmuster ein Minimum an Intensität hindurchtreten.

Eine weitere derartige Lösung (DD-PS 222 109) geht von einer optischen Abbildung des Meßobjektes mittels einer Linse auf eine CCD-Zeile aus, die als zweimalige optische Fouriertransformation betrachtet wird (vgl. E. Menzel, W. Mirande, I. Weingärtner, Fourier-Optik und Holographie, Springer-Verlag Wien, New York, 1973, S. 73). Die erste optische Fouriertransformation erfolgt aus dem Objektbereich in die hintere Brennebene der Linse, in der die Informationen über das Meßobjekt dann in Gestalt seines Beugungsmusters vorliegen, und die zweite optische Fouriertransformation erfolgt aus dieser Brennebene in die Bildebene. In der Brennebene wird eine optische Filterung mit Hilfe einer Anordnung aus Phasenstegen vorgenommen, die in der Bildebene ein hohes und scharfes Korrelationspeak entstehen läßt. Dieses wird in der CCD-Zeile ausgemessen, wobei die Intensität des Peaks ein Maß für die Dicke des Meßobjektes bildet. Der Verwendung von Bezugsbildern haftet generell der Mangel an, daß mit ihrer Hilfe nur Abweichungen von einem durch das Bezugsbild vorgegebenen Sollwert innerhalb eines eng begrenzten Meßbereiches erfaßt werden können. Zur Überdeckung umfangreicher Meßbereiche wird bei den genannten Verfahren vorgeschlagen, das Bezugsbild durch Änderung der Breite des Hilfsspaltes bzw. durch Änderung der im Strahlengang wirksamen Streifenbreite des optischen Filters meßbar zu verändern. In anderen technischen Lösungen wird die Größe des Beugungsmusters durch eine meßbare Verschiebung des Hilfsspaltes (DE-PS 827 123) bzw. des Drahtes unter Verwendung eines konvergenten Strahlungsbündels (DE-PS 933 651) oder durch Verwendung einer Gummilinse (DE-PS 2 165 693) an das feste Bezugsbild meßbar angepaßt. Alle diese Verfahren weisen jedoch den Nachteil auf, ihren Meßbereich durch eine mechanische Verstellung nacheinander abtasten zu müssen. Derartige mechanisch bewegte Bauelemente sind im Dauerbetrieb verschleißgefährdet und für kontinuierliche Messungen wenig geeignet. Der in DD-PS 222 109 vorgeschlagenen Lösung haftet zusätzlich der Mangel an, daß die Lage des Korrelationspeaks auf der CCD-Zeile von der Position des Meßobjektes abhängig ist. Damit sind nur geringfügige örtliche Verschiebungen des Meßobjektes quer zur optischen Achse zulässig. Bei laufendem Meßgut treten zusätzlich infolge unvermeidlicher seitlicher Auslenkungen Bewegungsunschärfen des Korrelationspeaks auf, deren Folge Genauigkeitseinbußen sind, die die Durchführbarkeit von Messungen an laufendem Meßgut in Frage stellen. Weiterhin hängt die als Maß für die Dicke des Meßobjektes dienende Intensität des Korrelationspeaks auch von der Intensität der verwendeten Lichtquelle ab. Instabilitäten dieser Lichtquelle begrenzen die erreichbare Meßgenauigkeit oder erfordern zu ihrer Kompensation einen zusätzlichen Aufwand. Außerdem werden zur Ausmessung der Intensität des Korrelationspeaks nur ein oder wenige Bildelemente der CCD-Zeile herangezogen, womit das Verfahren gegenüber Fehlern einzelner Meßwerte der CCD-Zeile störanfälliger ist.

Nach einem der Verwendung von optischen Bezugsbildern ähnlichen Prinzip arbeitet auch ein Abtastverfahren, bei dem eine vorgegebene Zählimpulsfolge die Funktion des Bezugsbildes übernimmt (DE-PS 1 908 275).

In einer weiteren technischen Lösung (DE-PS 1 925 587) wird vorgeschlagen, die Gesamtintensität aller durch Beugung oder Brechung abgelenkten Strahlen in einer Anordnung zu erfassen, wie sie zur Anwendung des Toeplerschen Schlierenverfahrens gebräuchlich ist, und diese als Maß für den Drahtdurchmesser zu nutzen. Dieses Verfahren hat den Mangel, daß Rauhigkeit und Unsauberkeit der Drahtoberfläche die Intensität des abgelenkten Lichtes und damit des Meßergebnisses in undefinierter Weise beeinflussen können.

Das Verfahren nach der US-PS-39 37 580 unterwirft das gesamte Beugungsmuster unmittelbar der Fourier-Transformation und erhält daraus die Autokorrelationsfunktion der Amplitudentransparenz des Meßobjektes. Die gesuchte Information über die Breite des Meßobjekts ist in dieser Autokorrelationsfunktion als Position eines Knickpunktes zwischen gegeneinander geneigten Teilabschnitten ihres Verlaufes enthalten, wobei Fallunterscheidungen zu beachten sind, nach denen der erste, zweite oder dritte Knickpunkt zur Auswertung heranzuziehen ist.

Ziel der Erfindung sind ein Meßverfahren und eine zu dessen Durchführung geeignete Vorrichtung, welche es gestatten, unter weitgehender Vermeidung mechanisch bewegter Bauteile den Durchmesser ruhender oder laufender dünner Drähte, Fasern, Flüssigkeitsstrahlen u. dgl. sowie die Breite von Spalten und den Durchmesser feiner Bohrungen berührungslos und zerstörungsfrei, mit hoher Genauigkeit und innerhalb eines großen Meßbereiches mit eindeutigem Ergebnis kontinuierlich zu messen.

Hauptursache für die technischen Nachteile der bekannten Erfindungen ist die Schwierigkeit, das für die Bestimmung des Durchmessers dünner Drähte, Fasern, Flüssigkeitsstrahlen u. dgl. sowie zur Spaltbreitenbestimmung und zur Bestimmung des Durchmessers feiner Bohrungen besonders geeignete Beugungsmuster unter weitgehender Ausschöpfung seines Informationsinhaltes mit hoher Geschwindigkeit zu erfassen und auszuwerten. Der Erfindung liegt deshalb die Aufgabe zugrunde, ein schnell und genau arbeitendes Meßverfahren und eine Vorrichtung zur Durchführung des Meßverfahrens zu entwickeln, mit deren Hilfe das Beugungsmuster über einen großen Meßbereich und mit eindeutigem Ergebnis sowie beim Einsatz in technologischen Prozessen verschleißfrei und störanfällig ausgewertet werden kann.

Erfindungsgemäß wird diese Aufgabe durch ein Meßverfahren gelöst, mit dem es möglich ist, den gesamten örtlichen Intensitätsverlauf einer oder beider Hälften des Beugungsmusters unter Abschneidung der unwesentlichen Bereiche bei großen Ablenkungswinkeln des gebeugten Lichtes sowie in der Nähe des ungebeugten Lichtstrahles lückenlos zu erfassen und diesen unter umfassender Nutzung der in ihm enthaltenen Informationen mit hoher Geschwindigkeit auszuwerten. Dazu wird der von einer optoelektronischen Vorrichtung simultan oder von einer Abtastvorrichtung sequentiell erfaßte Intensitätsverlauf digitalisiert, abgespeichert und bei Bedarf zur Rauschminderung akkumuliert. Zusätzlich kann zur Erhöhung der Genauigkeit noch eine Entzerrung der Nichtlinearitäten des erfaßten Beugungsmusters bezüglich der Ortskoordinate und eine Kompensation des Intensitätsabfalls mit wachsendem Ablenkungswinkel des gebeugten Lichtes vorgenommen werden, womit man einen hinsichtlich des Abstandes vom ungebeugten Strahl harmonischen Signalverlauf erhält. Das so erzeugte Datenfeld wird sodann erfindungsgemäß einer Fouriertransformation zur Ermittlung seines Frequenzspektrums unterworfen. Dabei erfolgt eine Informationsverdichtung, in deren Folge eine wesentliche Genauigkeitserhöhung gegenüber einer direkten Ausmessung des Beugungsmusters erreicht wird. Aus der so ermittelten Ortsfrequenz wird dann in bekannter Weise der Durchmesser oder die Breite der beugenden Struktur des Meßobjektes bestimmt.

Die erfindungsgemäße Vorrichtung zur Durchführung des Verfahrens besteht aus einer Beleuchtungsanordnung, einer Detektoranordnung und einer elektronischen Auswerteeinheit, welche einen Analog-Digitalwandler mit angeschlossenem digitalen Datenspeicher und einen Fourierprozessor enthält. Sie kann zusätzlich mit einer digitalen oder analogen Anzeige, einer Registriervorrichtung und einer Rückführung zur Steuerung den Durchmesser verändernder technologischer Prozesse versehen sein.

Die Beleuchtungsanordnung erfüllt die Funktion, das Meßobjekt mit parallelem, monochromatischem und kohärentem Licht zu beleuchten. Für dessen Erzeugung läßt sich vorzugsweise ein Laser verwenden. Zusätzlich kann die Beleuchtungsanordnung eine Vergrößerungs- und Filtervorrichtung, bestehend aus zwei auf derselben optischen Achse angeordneten Konvexlinsen sowie einer Lochblende in der gemeinsamen Brennebene beider Linsen, enthalten. Mit deren Hilfe kann der Lichtstrahl nach Bedarf aufgeweitet und in seiner Divergenz vermindert werden. Durch eine weitere Lochblende läßt sich der Durchmesser des Lichtstrahles dann so auf die Größe des benötigten Meßfeldes begrenzen, daß innerhalb dessen seine Intensitätsverteilung hinreichend homogen ist.

Der örtliche Intensitätsverlauf des Beugungsmusters wird sodann durch eine Detektoranordnung erfaßt. Sie enthält entweder eine optoelektronische Vorrichtung zur simultanen Erfassung des Beugungsmusters, z. B. eine Sensorzeile, oder eine Vorrichtung zu dessen sequentieller Abtastung und einen Fotoempfänger. Zusätzlich kann die Detektoranordnung eine Konvexlinse enthalten, welche das Beugungsmuster auf die in ihrer Brennebene angeordnete optoelektronische Vorrichtung oder auf den dort angeordneten Fotoempfänger projiziert. Dadurch wird entsprechend bekannter Gesetzmäßigkeiten der geometrischen Optik gewährleistet, daß die Lage des Beugungsmusters auf der optoelektronischen Vorrichtung oder dem Fotoempfänger von axialen oder lateralen Verschiebungen des Meßobjektes innerhalb des Lichtstrahles nicht beeinflußt wird. Diese Konvexlinse kann bei der Ausmessung geradliniger beugender Strukturen, wie sie z. B. bei Drähten und Spalten gegeben sind, zur Erleichterung der Justierung und zur Verringerung der Anforderung an die Positionierung oder Führung des Meßobjektes auch als Zylinderlinse ausgeführt oder mit einer Zylinderlinse in der Weise kombiniert sein, daß eine Fokussierung nur in der Ebene des Beugungsmusters stattfindet, senkrecht dazu jedoch eine gewisse Mindesthöhe des Beugungsmusters erhalten bleibt. Weiterhin kann die Detektoranordnung eine Blende zur Ausblendung des ungebeugten Lichtstrahles enthalten oder so ausgeführt sein, daß sie die Funktion einer solchen Blende erfüllt. Außerdem kann die Detektoranordnung ein optisches Mittel zur Kompensation des Intensitätsabfalls mit wachsendem Ablenkungswinkel des gebeugten Lichtes enthalten, z. B. ein ortsfest in bezug auf das Beugungsmuster vor der Sensorzeile angebrachtes Verlaufsfilter.

Die von der Detektoranordnung erfaßten Intensitätswerte werden der elektronischen Auswerteeinheit zugeführt. Diese enthält einen schnell und mit hoher Auflösung arbeitenden Analog-Digital-Wandler und einen digitalen Datenspeicher. Zusätzlich kann sie zur Verbesserung der Meßgenauigkeit noch mit elektronischen Mitteln zur Signalaufbereitung ausgestattet sein. Das betrifft einerseits eine Baugruppe zur Adressentransformation, in der eine Korrektur der Nichtlinearitäten des Beugungsmusters bezüglich der Ortskoordinate vorgenommen wird. Andererseits kann die Auswerteeinheit eine weitere Baugruppe enthalten, welche allein oder im Zusammenwirken mit dem optischen Mittel in der Detektoranordnung eine Kompensation des Intensitätsabfalls mit wachsendem Beugungswinkel bewirkt. Gemäß der Erfindung enthält die elektronische Auswerteeinheit weiterhin einen Fourierprozessor zur Ermittlung der dem gespeicherten Datenfeld zugrunde liegenden Ortsfrequenz, welche bei bekannter Wellenlänge des verwendeten Lichtes und bekannten geometrischen Verhältnissen bei der Abbildung oder Abtastung des Beugungsmusters ein direktes Maß für den Durchmesser oder die Breite der beugenden Struktur des Meßobjektes ist.

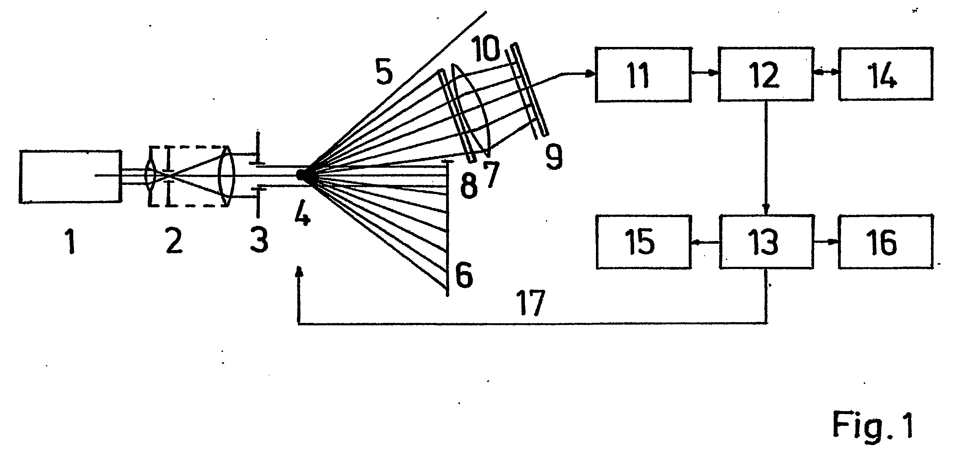

Das erfindungsgemäße Meßverfahren zur berührungslosen Durchmesserbestimmung und eine erfindungsgemäße Vorrichtung zur Durchführung des Meßverfahrens sollen anhand einer Zeichnung (Fig. 1) erläutert werden.

Die Teile 1 bis 3 bilden die Beleuchtungsanordnung. Der Strahl eines He-Ne-Lasers 1 wird durch die Vergrößerungs- und Filtervorrichtung 2 so aufgeweitet, in seiner Divergenz vermindert und mit Hilfe der Lochblende 3 auf den gewünschten Durchmesser begrenzt, daß innerhalb des Meßfeldes die Strahlintensität hinreichend homogen ist.

Der auszumessende Draht oder eines der anderen Meßobjekte 4 wird senkrecht zur Ebene der Zeichnung im Laserstrahl angeordnet oder durch ihn hindurchgeführt und erzeugt das Fraunhofersche Beugungsmuster 5.

Die Detektoranordnung besteht aus den Teilen 6 bis 10. Nach Ausblendung des ungebeugten Laserstrahles durch die Blende 6 projiziert die Konvexlinse 7 eine Hälfte des Beugungsmusters unter Abschneidung der unwesentlichen Bereiche bei großen Ablenkungswinkeln auf die in der Brennebene der Konvexlinse angeordnete Sensorzeile 9, die mit der zugehörigen Ausleseelektronik und der Konvexlinse zu einer Zeilenkamera konstruktiv vereinigt ist. Die Konvexlinse ist außerdem mit einer Zylinderlinse 8 in der Weise kombiniert, daß eine Fokussierung nur in der Ebene des Beugungsmusters stattfindet. Weiterhin ist vor der Sensorzeile ein Verlaufsfilter 10 angeordnet, mit dessen Hilfe der Intensitätsabfall des Beugungsmusters mit wachsendem Ablenkungswinkel des gebeugten Lichtes kompensiert wird. Diese Detektoranordnung ist insgesamt so dimensioniert, daß in Erfüllung des Shannonschen Abtasttheorems jede aus je einem Intensitätsmaximum und -minimum bestehende Periode des Beugungsmusters von wenigstens zwei Bildelementen der Sensorzeile erfaßt wird.

Die elektronische Auswerteeinheit enthält die Teile 11 bis 14. Der in der Sensorzeile in elektrische Signale umgewandelte örtliche Intensitätsverlauf des Beugungsmusters wird ausgelesen und dem Analog-Digitalwandler 11 mit angeschlossenem digitalem Datenspeicher 12 zugeführt, so daß fortlaufend und lückenlos jeder Speicherplatz mit der Information eines Bildelementes der Sensorzeile gefüllt wird. Dabei kann zur Verminderung des Rauschens auch eine wiederholte Auslesung und Akkumulation der Signale vorgenommen werden. Dieses Datenfeld wird anschließend zur Ermittlung seinesFrequenzspektrums dem Fourierprozessor 13 zugeführt, wobei dem digitalen Datenspeicher noch die Baugruppe zur Adressentransformation 14 zugeschaltet ist. Mit ihrer Hilfe werden zuvor durch eine Transformation der Ortskoordinate. die Abbildungsverzerrungen und Nichtlinearitäten des Beugungsmusters korrigiert, in deren Ergebnis sich ein bezüglich des Abstandes vom ungebeugten Laserstrahl harmonischer Signalverlauf ergibt. Mittels einer schnellen Fouriertransformation wird dann aus dem so aufbereiteten Datenfeld die Ortsfrequenz des entzerrten Beugungsmusters ermittelt, aus dem sich der Durchmesser oder die Breite der beugenden Struktur des Meßobjektes ergibt.

Das Meßergebnis wird auf der digitalen Anzeige 15 dargestellt, auf einer Registriervorrichtung 16 mit Drucker, Lochband oder einem anderen Datenträger aufgezeichnet und über die Rückführung 17 zur Steuerung der Durchmesser oder die Spaltbreite verändernder technologischer Prozesse zur Verfügung gestellt.

Mit der Vorrichtung lassen sich entsprechend der Arbeitsgeschwindigkeit der Ausleseelektronik und der Bestandteile der elektronischen Auswerteeinheit Meßzeiten von weniger als 1 s realisieren, so daß das Meßverfahren auch zur Durchmesserbestimmung im Echtzeitbetrieb eingesetzt werden kann. Mit dem beschriebenen Meßverfahren und der angegebenen Vorrichtung lassen sich Durchmesser im Bereich von 3 bis 1000 μm mit einer Genauigkeit von ± 0,1 % ± 0,1 μm bestimmen.

**Patentansprüche**

1. Meßverfahren zur berührungslosen Durchmesserbestimmung dünner Drähte, Fasern, Flüssigkeitsstrahlen u.dgl. sowie zur berührungslosen Spaltbreitenbestimmung und zur berührungslosen Durchmesserbestimmung feiner Bohrungen mit Hilfe der Fraunhoferschen Beugung bei Beleuchtung des Meßobjektes mit einem parallelen, monochromatischen und kohärenten Lichtstrahl, gekennzeichnet dadurch, daß der gesamte örtliche Intensitätsverlauf einer oder beider Hälften des vom Meßobjekt ausgehenden Beugungsmusters unter Abschneidung der unwesentlichen Bereiche bei großen Ablenkungswinkeln des gebeugten Lichtes und des störenden Bereiches in der Nähe des ungebeugten Lichtstrahles lückenlos erfaßt, digitalisiert und in digitaler Form abgespeichert wird und das so erzeugte Datenfeld nach Kompensation des Intensitätsabfalls mit wachsendem Ablenkungswinkel des gebeugten Lichtes durch eine Fouriertransformation in Ortsfrequenzen zerlegt und daraus der Durchmesser bzw. die Breite des Meßobjektes bestimmt wird

2. Meßverfahren nach Anspruch 1, gekennzeichnet dadurch, daß der örtliche Intensitätsverlauf erfaßt und akkumuliert wird.

3. Meßverfahren nach Anspruch 1, gekennzeichnet dadurch, daß eine Entzerrung der Nichtlinearitäten des erfaßten Beugungsmusters bezüglich der Ortskoordinate vorgenommen wird.

4. Vorrichtung zur Durchführung des Meßverfahrens nach Anspruch 1 bis 3, bestehend aus einer Beleuchtungsanordnung, die eine Lichtquelle, insbesondere einen Laser, enthält, einer Detektoranordnung zur Erfassung des örtlichen Intensitätsverlaufs des Beugungsmusters und einer elektronischen Auswerteeinheit, die einen Analog-Digitalwandler, einen digitalen Datenspeicher und einen Fourierprozessor enthält, und gekennzeichnet dadurch, daß die Detektoranordnung eine Blende zur Ausblendung des ungebeugten Lichtstrahles und des Beugungsmaximums nullter Ordnung enthält, und daß in der Vorrichtung ein optisches Mittel zur ortsabhängigen Lichtabschwächung enthalten ist.

5. Vorrichtung nach Anspruch 4, dadurch gekennzeichnet, daß die Detektoranordnung die Funktion einer Blende zur Ausblendung des ungebeugten Lichtstrahles und des Beugungsmaximums nullter Anordnung enthält.

6. Vorrichtung nach Anspruch 4, dadurch gekennzeichnet, daß die Vorrichtung als optisches Mittel zur ortsabhängigen Lichtabschwächung ein als Bestandteil der Detektoranordnung ortsfest in Bezug auf das Beugungsmuster angeordnetes Verlaufsfilter enthält.

7. Vorrichtung nach Anspruch 4, dadurch gekennzeichnet, daß in der Vorrichtung eine elektrische Baugruppe zur ortsabhängigen Abschwächung bzw. Verstärkung der von der Detektoranordnung erfaßten Signale enthalten ist.

8. Vorrichtung nach einem der Ansprüche 4 bis 7, gekennzeichnet dadurch, daß die Beleuchtungsanordnung eine Vergrößerungs- und Filtervorrichtung zur Strahlaufweitung, Divergenzverminderung und Homogenisierung des Lichtstrahles enthält, welche vorzügsweise aus zwei auf derselben optischen Achse angeordneten Konvexlinsen sowie einer Lochblende in der gemeinsamen Brennebene beider Linsen besteht.

9. Vorrichtung nach einem der Ansprüche 4 bis 7, gekennzeichnet dadurch, daß die Detektoranordnung eine optoelektronische Vorrichtung, vorzugsweise eine Sensorzeile zur simultanen Erfassung des örtlichen Intensitätsverlaufs enthält.

10. Vorrichtung nach einem der Ansprüche 4 bis 7, gekennzeichnet dadurch, daß die Detektoranordnung eine Vorrichtung zur sequentiellen Abtastung des örtlichen Intensitätsverlaufs und einen Fotoempfänger enthält.

11. Vorrichtung nach einem der Ansprüche 4 bis 7 und 9 sowie 10, gekennzeichnet dadurch, daß die Detektoranordnung eine Konvexlinse enthält, welche das Beugungsmuster auf die in ihrer Brennebene angeordnete optoelektronische Vorrichtung oder auf den dort angeordneten Fotoempfänger projiziert.

12. Vorrichtung nach einem der Ansprüche 4 bis 7 und 11, gekennzeichnet dadurch, daß die Konvexlinse als Zylinderlinse ausgeführt oder mit einer Zylinderlinse kombiniert ist.

13. Vorrichtung nach einem der Ansprüche 4 bis 7, gekennzeichnet dadurch, daß in der Auswerteeinheit eine elektronische Baugruppe zur Adressentransformation im digitalen Datenspeicher enthalten ist, welche die Nichtlinearitäten des von der Detektoranordnung erfaßten Beugungsmusters bezüglich der Ortskoordinate korrigiert.

## Claims

1. Measuring process for the contactless determination of the diameters of thin wires, fibres, liquid crystals and the like and for the contactless determination of gap widths and for the contactless determination of the diameters of fine bores by Fraunhofer diffraction, where the object to be measured is illuminated by means of a beam of parallel, monochromatic and coherent light, characterised in that the entire local variation in intensity of one or both halves of the diffraction pattern coming from the object to be measured, with the incidental regions with a large angle of deviation of the diffracted light and the disturbance region in the vicinity of the undiffracted beam of light being cut off, is uninterruptedly detected, digitised and stored in digital form, and, after the decrease of intensity with an increasing angle of deviation of the diffracted light has been compensated for, the resulting data field is decomposed into spatial frequencies by means of Fourier transformation and the diameter or the width of the object to be measured is determined therefrom.

2. Measuring process according to claim 1, characterised in that the local variation in intensity is detected and accumulated.

3. Measuring process according to claim 1, characterised in that the nonlinearity of the detected diffraction pattern in relation to the spatial coordinates is rectified.

4. Device for carrying out the measuring process according to claims 1 to 3, consisting of an illumination system comprising a light source, in particular, a laser, a detecting system for detecting the local variation in intensity of the diffraction pattern and an electronic evaluation unit comprising an analogue to digital converter, a digital data storage unit and a Fourier processor, and characterised in that the detecting system comprises a diaphragm for blocking out the undiffracted beam of light and the principal maximum, and that the device comprises optical means for the attenuation of light dependent on position.

5. Device according to claim 4, characterised in that the detecting system has the function of a diaphragm for blocking out the undiffracted beam of light and the principal maximum.

6. Device according to claim 4, characterised in that as optical means for the attenuation of light dependent on position the device comprises a variable density filter constituting a component of the detecting system fixed in relation to the diffraction pattern.

7. Device according to claim 4, characterised in that the device comprises an electrical unit for weakening or intensification, depending on the position, of the signals detected by the detecting system.

8. Device according to one of claims 4 to 7, characterised in that the illumination system comprises a magnifying and filtering device for beam expansion, reduction of divergence and homogenization of the beam of light, preferably consisting of two convex lenses disposed on the same optical axis and a pinhole diaphragm in the common focal plane of the two lenses.

9. Device according to one of claims 4 to 7, characterised in that the detecting system comprises an optoelectronic device, preferably a line of sensors, for the simultaneous detection of the local variation in intensity.

10. Device according to one of claims 4 to 7, characterised in that the detecting system comprises a device for the sequential scanning of the local variation in intensity and a photodetector.

11. Device according to one of claims 4 to 7 and 9 to 10, characterised in that the detecting system comprises a convex lens which projects the diffraction pattern on to the optoelectronic device disposed in its focal plane or on to the photodetector disposed there.

12. Device according to one of claims 4 to 7 and 11, characterised in that the convex lens is in the form of a cylindrical lens or is combined with a cylindrical lens.

13. Device according to one of claims 4 to 7, characterised in that the evaluation unit comprises an electronic unit for the address transformation in the digital data storage unit, which rectifies the nonlinearity of the diffraction pattern detected by the detecting system in relation to the spatial coordinates.

## Revendications

1. Procédé de mesure pour effectuer sans contact la détermination du diamètre de fils, de fibres et de jets de liquide minces et similaires, ainsi que pour déterminer sans contact la largeur d'interstices et pour déterminer sans contact le diamètre de petits alésages à l'aide de la diffraction de Fraunhofer par éclairage de l'objet à mesurer par un rayon lumineux parallèle, monochromatique et cohérent, caractérisé en ce que l'on procède à la mesure sans lacune de la totalité de l'allure locale de l'intensité d'un ou de deux moitiés du modèle de diffraction partant de l'objet à mesurer, en éliminant les zones sans importance pour les grands angles de déviation de la lumière diffractée et de la zone perturbatrice situé à proximité du rayon lumineux non diffracté, que l'on numérise cette mesure et qu'on la met en mémoire sous la forme numérisée et qu'après compensation de la chute d'intensité du fait de l'augmentation de l'angle de déviation de la lumière diffractée on décompose le champ de données ainsi produit en fréquences locales par une transformation de Fourrier et qu'on en détermine le diamètre ou la largeur de l'objet à mesurer.

2. Procédé de mesure selon la revendication 1, caractérisé en ce que l'allure locale de l'intensité est mesurée et cumulée.

3. Procédé de mesure selon la revendication 1, caractérisé en ce qu'on effectue un redressement des non-linéarités du modèle de diffraction mesuré par rapport aux coordonnées locales.

4. Dispositif pour l'exécution du procédé de mesure selon les revendications 1 à 3, se composant d'une dispositif d'éclairage contenant une source de lumière, en particulier un laser, d'un dispositif détecteur pour détecter l'allure locale de l'intensité du modèle de diffraction et d'une unité d'exploitation électronique contenant un convertisseur analogique-numérique, une mémoire de données numérique et un processeur de Fourrier, et caractérisé en ce que le dispositif détecteur contient un diaphragme pour diaphragmer le rayon de lumière non diffracté et le maximum de diffraction d'ordre zéro, et en ce qu'un moyen optique d'affaiblissement de la lumière en fonction de la localisation est contenu dans le dispositif.

5. Dispositif selon la revendication 4, caractérisé en ce que le dispositif détecteur contient la fonction d'un diaphragme en vue de diaphragmer le rayon de lumière non diffracté et du maximum de diffraction d'ordre zéro.

6. Dispositif selon la revendication 4, caractérisé en ce que, comme moyen d'affaiblissement de la lumière en fonction de la localisation, le dispositif contient un filtre d'allure disposé de manière fixe par rapport au modèle de diffraction, en faisant partie du dispositif détecteur.

7. Dispositif selon la revendication 4, caractérisé en ce que le dispositif contient un groupe structurel électrique destiné à l'affaiblissement ou l'amplification en fonction de la localisation des signaux captés par le dispositif détecteur.

8. Dispositif selon l'une des revendications 4 à 7, caractérisé par le fait que le dispositif d'éclairage comporte un dispositif d'agrandissement et un dispositif de filtre en vue d'agrandir le rayon, de diminuer la divergence et de l'homogénéisation du rayon lumineux, qui se compose de préférence de deux lentilles convexes disposées sur le même axe optique, ainsi que d'un écran percé placé dans le plan focal comme des deux lentilles.

9. Dispositif selon l'une des revendications 4 à 7, caractérisé par le fait que le dispositif détecteur contient un dispositif optoélectronique, de préférence une ligne de capteur destinée à la mesure simultanée de l'allure locale de l'intensité.

10. Dispositif selon l'une des revendications 4 à 7, caractérisé par le fait que le dispositif détecteur comprend un dispositif détecteur en vue de l'exploration séquentielle de l'allure locale de l'intensité et un photorécepteur.

11. Dispositif selon l'une des revendications 4 à 7 et 9 et 10, caractérisé par le fait que le dispositif détecteur contient une lentille convexe projetant le modèle de diffraction sur le dispositif optoélectronique disposé dans son plan focal ou sur le photorécepteur y étant disposé.

12. Dispositif selon l'une des revendications 4 à 7 et 11, caractérisé par le fait que la lentille convexe est une lentille cylindrique ou qu'elle est combinée à une lentille cylindrique.

13. Dispositif selon l'une des revendications 4 à 7, caractérisé en ce qu'un groupe structurel électronique destiné à la transformation des adresses dans la mémoire de données numérique est contenue dans l'unité d'exploitation et corrige les non-linéarités du modèle de diffraction capté par le dispositif détecteur en fonction des coordonnées locales.

Fig. 1

EP 0 218 151 B1